# EUROPÄISCHE PATENTSCHRIFT

(11) **EP 1 095 536 B1**
(45) Veröffentlichungstag und Bekanntmachung des Hinweises auf die Patenterteilung: **12.09.2012**
(21) Anmeldenummer: 99942766.9
(22) Anmeldetag: 01.07.1999
(51) Int. Cl.: H04Q 11/04, H04L 12/56

(54) **VERFAHREN ZUM EINRICHTEN EINES LEITWEGES ÜBER EIN KOMMUNIKATIONSNETZ**
METHOD FOR ESTABLISHING A ROUTE VIA A COMMUNICATIONS NETWORK
PROCEDE D'ETABLISSEMENT D'UNE VOIE SUR UN RESEAU DE COMMUNICATION

(30) Priorität: 03.07.1998 DE 19829821
(43) Veröffentlichungstag der Anmeldung: 02.05.2001
(73) Patentinhaber: Siemens Enterprise Communications GmbH & Co. KG, 81379 München (DE)
(72) Erfinder: HÜNLICH, Klaus, D-85467 Neuching (DE)
(74) Vertreter: Fritzsche, Thomas
(86) Internationale Anmeldenummer: PCT/DE1999/001953
(87) Internationale Veröffentlichungsnummer: WO 2000/002412

(56) Entgegenhaltungen:
- EP-A- 0 406 842
- BAKKER E M ET AL: "PREFIX ROUTING SCHEMES IN DYNAMIC NETWORKS" COMPUTER NETWORKS AND ISDN SYSTEMS,NL,NORTH HOLLAND PUBLISHING. AMSTERDAM, Bd. 26, Nr. 4, Seite 403-421 XP000415048 ISSN: 0169-7552
- GARCIA-LUNA-ACEVES J J: "LIBRA: A DISTRIBUTED ROUTING ALGORITHM FOR LARGE INTERNETS" PROCEEDINGS OF THE GLOBAL TELECOMMUNICATIONS CONFERENCE (GLOBECOM),US,NEW YORK, IEEE, Bd. -, Seite 1465-1471 XP000390448 ISBN: 0-7803-0608-2
- MCDONALD A B ET AL: "ARP VERSUS ES-IS: PERFORMANCE EVALUATION OF NEIGHBOUR-GREETING PROTOCOLS" COMPUTER JOURNAL,GB,OXFORD UNIVERSITY PRESS, SURREY, Bd. 39, Nr. 10, Seite 854-867 XP000729298 ISSN: 0010-4620

## Beschreibung

Die Erfindung betrifft ein Verfahren zum Einrichten eines Leitweges über ein, mehrere miteinander verbundene Netzknoten aufweisendes Kommunikationsnetz gemäß dem Oberbegriff des Patentansprüche 1 bzw. 2, 3, 4.

Bei Kommunikationsnetzen wird je nach Topologie der Kommunikationsnetze zwischen verbindungslosen und verbindungsorientierten Kommunikationsnetzen unterschieden. In verbindungslosen Kommunikationsnetzen entfällt eine, einer Nachrichtenübermittlung zwischen dem Kommunikationsnetz zugeordneten Kommunikationsendgeräten vorausgehende Signalisierungsphase, in deren Rahmen eine Kommunikationsverbindung zwischen den Kommunikationsendgeräten eingerichtet wird. Im Rahmen einer Signalisierungsphase wird eine Schicht-3-Verbindung (Vermittlungsschicht) gemäß des OSI-Referenzmodells (Open Systems Interconnection), also die Kommunikationsverbindung zwischen den Kommunikationsendgeräten durch abschnittsweise Verknüpfung einzelner Schicht-2-Verbindungen (Sicherungsschicht) gemäß OSI-Referenzmodell - in der Literatur häufig auch als Punkt-zu-Punkt-Verbindung bezeichnet - eingerichtet.

Verbindungslose Kommunikationsnetze sind beispielsweise lokale Netze - in der Literatur häufig mit LAN (Local Area Network) abgekürzt - mit einer Ring- oder Busarchitektur. In einem verbindungslosen Kommunikationsnetz wird ein zu übermittelndes Nachrichtenpaket an jedes, dem Kommunikationsnetz zugeordnete Kommunikationsendgerät übermittelt. Die Entscheidung welches Kommunikationsendgerät das empfangene Nachrichtenpaket weiterverarbeitet bzw. verwirft, wird durch den Empfänger des Nachrichtenpakets getroffen.

Analog hierzu werden Kommunikationsdienste, bei denen eine Nachrichtenübermittlung ohne Aufbau einer, im Rahmen einer Signalisierungsphase eingerichteten Punkt-zu-Punkt-Kommunikationsverbindung erfolgt, als verbindungslose Dienste bezeichnet. Derartige verbindungslose Dienste sind jedoch nur innerhalb lokaler Netze (LANs) mit entsprechender Netztopologie realisierbar.

Im Rahmen einer Nachrichtenübermittlung zwischen zwei, unterschiedlichen Kommunikationsnetzen zugeordneten Kommunikationsendgeräten, muß bei einem Netzübergang die fehlende Signalisierung durch entsprechende Maßnahmen kompensiert werden. Diese Kompensation erfolgt durch sogenannte 'Router', durch die eine Verknüpfung von Kommunikationsnetzen mit unterschiedlicher Netztopologie realisiert wird.

Ein 'Router' realisiert hinsichtlich seiner wesentlichen Funktion die Schicht 3 (Vermittlungsschicht) des OSI-Referenzmodells, wobei mit Hilfe eines 'Routers' Netze mit jeweils unterschiedlicher Topologie der Schichten 1 (Bitübertragungsschicht) und 2 (Sicherungsschicht) physikalisch verbunden werden. Um Nachrichtenpakete zwischen den an einen 'Router' angeschlossenen Netzen zu vermitteln, werden die in Routinginformationen der Nachrichtenpakete enthaltenen Adressangaben - insbesondere eine Ziel- und eine Ursprungsadresse - von einer im 'Router' befindlichen Steuereinrichtung interpretiert und bewertet. Hierzu bewertet der 'Router' die in einem zu übermittelndem Nachrichtenpaket enthaltenen Schicht-3-Adressen und wandelt diese in entsprechende Schicht-2-Adressen um. Anhand dieser Schicht-2-Adressen werden die für eine Schicht-3-Verbindung (d.h. für die Endgeräteverbindung zwischen den Kommunikationsendgeräten) notwendigen Schicht-2-Verbindungen (d.h. die zwischen jeweils zwei in einem Netz angeordneten Netzknoten einzurichtenden Verbindungen) eingerichtet. Anschließend werden die Nachrichtenpakete für eine Übermittlung protokollgerecht konvertiert und über die eingerichteten Schicht-2-Verbindungen übermittelt.

Im Rahmen einer Nachrichtenübermittlung über ein ATM-basiertes Kommunikationsnetz (Asynchroner Transfer Modus) ist für ein Einrichten einer Kommunikationsverbindung zwischen zwei Kommunikationsendgeräten eine der Nachrichtenübermittlung vorausgehende Signalisierungsphase notwendig, d.h. ein ATMbasiertes Kommunikationsnetz ist ein verbindungsorientiertes Kommunikationsnetz.

Hierbei werden in einem ATM-basierten Kommunikationsnetz vor Beginn der Nachrichtenübermittlung durch Austausch von Signalisierungsinformationen Verbindungstabellen mit aus einer Virtuellen-Kanal-Identifizierung und aus einer Virtuellen-Pfad-Identifizierung bestehenden Vermittlungsinformation in der jeweiligen ATM-Netzknoten eingerichtet. In den Verbindungstabellen ist der Virtuellen-Kanal-Identifizierung ein VCI-Wert und der Virtuellen-Pfad-Identifizierung ein VPI-Wert zugewiesen. Durch die in die Verbindungstabellen eingetragene Vermittlungsinformation ist festgelegt, wie die virtuellen Pfade bzw. in den virtuellen Pfaden enthaltene virtuelle Übertragungskanäle der an einem ATM-Netzknoten ein- und ausgehenden Verbindungen durch die Signalisierung einander zugeordnet sind, d.h. welcher Eingang mit welchem Ausgang vermittlungstechnisch verknüpft ist.

Beispielsweise ist aus der europäischen Offenlegungsschrift EP 0 406 842 A2 ein auf dem Asynchronen Transfer Modus basierendes Kommunikationsnetz bekannt, bei dem im Rahmen einer Signalisierungsphase Vermittlungsinformationen mittels einer von einem Ursprungs- zu einem Ziel-Kommunikationsendgerät übermittelten Verbindungsaufbaumeldung und einer nachfolgend vom Ziel- zum Ursprungs-Kommunikationsendgerät übermittelten Bestätigungsmeldung in den durchlaufenen Netzknoten des Kommunikationsnetzes eingetragen werden.

Bei dem als Asynchronen Transfer Modus (ATM) bekannten zellbasierten Datenübertragungsverfahren werden für den Datentransport Datenpakete fester Länge, sogenannte ATM-Zellen benutzt. Eine ATM-Zelle setzt sich aus einem, für den Transport einer ATM-Zelle relevante Vermittlungs-Daten enthaltenden, fünf Bytes langem Zellkopf, dem sogenannten 'Header' und einem 48 Bytes langem Nutzdatenfeld, der sogenannten 'Payload' zusammen. Über die virtuellen Verbindungen übermittelte ATM-Zellen weisen im Zellkopf im wesentlichen aus einem VPI- und einen VCI-Wert bestehende Vermittlungs-Daten auf. Am Eingang eines ATM-Netzknotens werden die im Header hinterlegten Daten bearbeitet, d.h. die darin angeordneten Vermittlungs-Daten erfaßt und bewertet. Anschließend werden die ATM-Zellen anhand den in der Verbindungstabelle gespeicherten Vermittlungsinformationen durch ein im ATM-Netzknoten angeordnetes Koppelfeldmodul zu einem, ein bestimmtes Ziel repräsentierenden Ausgang vermittelt.

Um verbindungslose Dienste in einem ATM-basierten Kommunikationsnetz emulieren zu können, muß in jedem im ATM-basierten Kommunikationsnetz angeordneten ATM-Netzknoten eine Umwertung der im Zellkopf einer übermittelten ATM-Zelle hinterlegten Vermittlungs-Daten erfolgen, so daß die benötigte Vermittlungskapazität bzw. Rechenleistung in einem ATM-Netzknoten stark anwächst. Dies kann bei einem erhöhten Datenaufkommen zu einer Übermittlungsverzögerung - in der Literatur häufig mit 'Delay' bezeichnet - führen, so daß beispielsweise verbindungslose Dienste im Rahmen von Anwendungen mit Realzeit-Anforderungen nicht eingesetzt werden können.

Um den benötigten Rechenaufwand in einem ATM-Netzknoten zu reduzieren, ist aus "ATM NETWORKS - Concepts, Protocols, Applications", Addison-Wesley, 3rd edition, 1998, ISBN 0-201-17817-6 bekannt, verbindungslose Dienste über spezielle sogenannte 'CL Server' (Connection Less Server) zu realisieren. Diese 'CL Server' sind untereinander verbunden und nehmen die für eine Emulation von verbindungslosen Diensten in einem ATM-basierten Kommunikationsnetz notwendigen Adressumsetzungen analog den Verfahren, wie sie bei den 'Routern' implementiert sind, vor. Bei den hier verwendeten Verfahren kann es jedoch bei einem erhöhten Datenaufkommen auch zu einer Verarbeitungs- bzw. Übermittlungsverzögerung kommen.

Der vorliegenden Erfindung liegt die Aufgabe zugrunde, ein Verfahren anzugeben, bei dem die Verarbeitungs- bzw. Übermittlungsverzögerung bei einer Emulation von verbindungslosen Diensten über ein verbindungsorientiertes Kommunikationsnetz reduziert wird.

Die Lösung dieser Aufgabe erfolgt erfindungsgemäß mit den Merkmalen des Patentanspruchs 1 bzw. 2,3,4.

Ein wesentlicher Vorteil der Erfindung besteht darin, daß in den Netzknoten des Kommunikationsnetzes, im Gegensatz zum Stand der Technik, bei dem Vermittlungsinformationen für alle im Kommunikationsnetz angeordneten Netzknoten in einem Netzknoten gespeichert werden, nur diejenigen Vermittlungsinformationen gespeichert werden, die für die aktuell über den Netzknoten geführten Verbindungen benötigt werden. Dies führt zu einer erheblichen Reduktion der benötigten Speicherkapazität im Netzknoten.

Ein weiterer Vorteil der Erfindung besteht darin, daß beim vorliegenden Verfahren zur Leitwegermittlung im Gegensatz zur Signalisierung in einem verbindungsorientierten Kommunikationsnetz keine Übertragungsbedingungen, wie z.B. eine Vereinbarung über die benötigte Übertragungskapazität oder über Realzeit-Anforderungen getroffen werden, so daß eine Leitwegermittlung und eine nachfolgende Nachrichtenübermittlung schneller realisierbar ist.

Die nebengeordneten Ansprüche 2, 3, 4 beziehen sich auf eine Variante der Erfindung, bei der eine Verbindungsaufbaumeldung bzw. eine Bestätigungsmeldung nicht bis zu dem an einer Verbindung beteiligten Ursprungs- bzw. Ziel-Kommunikationsendgerät weiterübermittelt wird, sondern in dem, dem Ursprungs- bzw. Ziel-Kommunikationsendgerät zugeordneten Netzknoten verarbeitet wird. Dies hat den Vorteil, daß das Ursprungs- bzw. das Ziel-Kommunikationsendgerät von Routing-Aufgaben freigehalten werden kann.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß eine Entscheidung über die Auswahl eines Leitweges zwischen einem Ursprungs-Kommunikationsendgerät und einem Ziel-Kommunikationsendgerät durch den Teilnehmer am Ziel-Kommunikationsendgerät getroffen werden kann, so daß die für ihn relevanten Kriterien für einen Verbindungsaufbau, wie z.B. die Übermittlungszeit, die Kosten oder die auf einem ermittelten Leitweg zur Verfügung gestellte Übertragungskapazität zum Tragen kommen.

Des weiteren wird durch ein Löschen von in einem Netzknoten gespeicherten Vermittlungsinformationen nach Ablauf einer vorgebbaren Zeitspanne (z.B. nach 10 Minuten), in der keine dieser Vermittlungsinformation zugeordneten Nachrichten übermittelt wurden, sichergestellt, daß nur die aktuell benötigten Vermittlungsinformationen in einem Netzknoten gespeichert werden.

Ein Ausführungsbeispiel der Erfindung wird im folgenden anhand der Zeichnung näher erläutert.

Dabei zeigen:
- Fig 1:: ein Strukturbild zur schematischen Darstellung eines ATM-basierten Kommunikationsnetzes mit darin angeordneten Netzknoten;
- Fig 2:: ein Strukturbild zur schematischen Darstellung einer Verbindungsaufbaumeldung bzw. einer Bestätigungsmeldung;
- Fig 3:: ein Ablaufdiagramm zur Veranschaulichung der bei einer Übermittlung einer Verbindungsaufbaumeldung von einem Ursprungs-Kommunikationsendgerät zu einem Ziel-Kommunikationsendgerät ablaufenden Verfahrensschritte;
- Fig 4:: ein Ablaufdiagramm zur Veranschaulichung der bei einer Übermittlung einer Bestätigungsmeldung vom Ziel-Kommunikationsendgerät zum Ursprungs-Kommunikationsendgerät ablaufenden Verfahrensschritte.

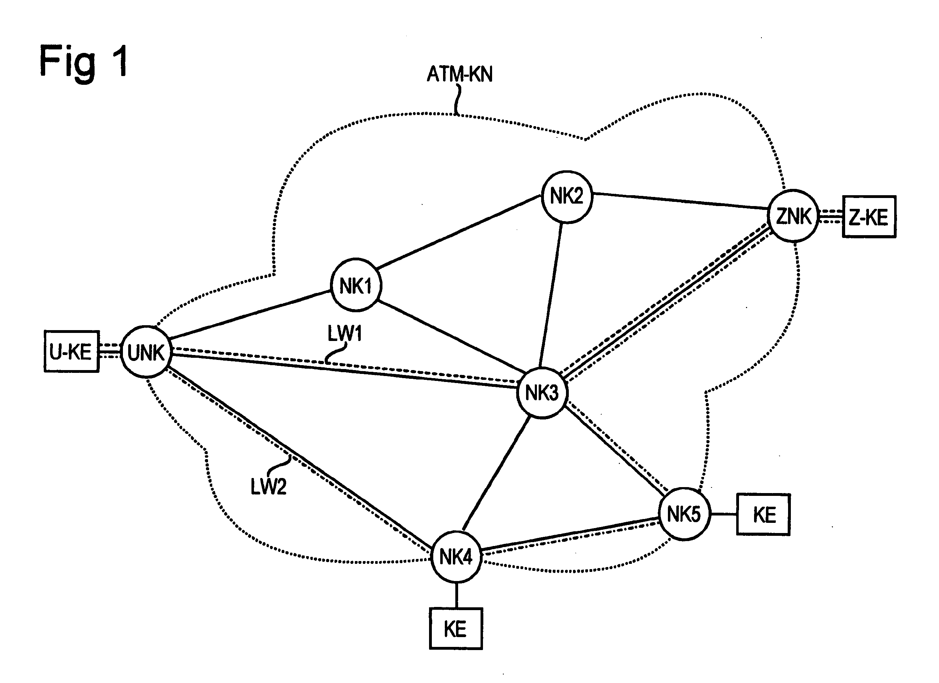

Fig 1 zeigt eine schematische Darstellung eines ATM-basierten Kommunikationsnetzes ATM-KN mit darin angeordneten, untereinander verbundenen Netzknoten NK. Die Netzknoten NK werden beispielsweise durch ATM-Vermittlungssysteme realisiert, an die Kommunikationsendgeräte anschließbar sind. Beispielhaft sind zwei Kommunikationsendgeräte KE dargestellt, die über einen vierten Netzknoten NK4 bzw. über einen fünften Netzknoten NK5 mit dem ATM-basierten Kommunikationsnetz ATM-KN verbunden sind.

Des weiteren ist über einen Netzknoten NK - im weiteren mit Ursprungs-Netzknoten UNK bezeichnet - ein Ursprungs-Kommunikationsendgerät U-KE und über einen weiteren Netzknoten NK - im weiteren mit Ziel-Netzknoten ZNK bezeichnet - ein Ziel-Kommunikationsendgerät Z-KE mit dem ATM-basierten Kommunikationsnetz ATM-KN verbunden. Ausgehend vom Ursprungs-Kommunikationsendgerät U-KE soll über das ATM-basierte Kommunikationsnetz ATM-KN eine Nachricht an das Ziel-Kommunikationsendgerät Z-KE übermittelt werden.

Hierzu wird für eine Ermittlung eines Leitweges vom Ursprungs-Kommunikationsendgerät U-KE zum Ziel-Kommunikationsendgerät Z-KE eine Verbindungsaufbaumeldung R vom Ursprungs-Kommunikationsendgerät U-KE an den Ursprungs-Netzknoten UNK übermittelt. Für die Übermittlung von Verbindungsaufbaumeldungen R an einen benachbarten Netzknoten NK sind die einzelnen Netzknoten NK über eine spezielle Verbindung miteinander verbunden. Beispielsweise ist ein bestimmter Übertragungskanal - in der Literatur häufig mit VC (Vituell Channel) abgekürzt - für die Übermittlung von Verbindungsaufbaumeldungen R reserviert. Eine Verbindungsaufbaumeldung R kann über unterschiedliche Leitwege LW vom Ursprungs-Kommunikationsendgerät U-KE an das Ziel-Kommunikationsendgerät Z-KE übermittelt werden. Beispielhaft sind ein erster Leitweg LW1 und ein zweiter Leitweg LW2 in der Figur gestrichelt dargestellt.

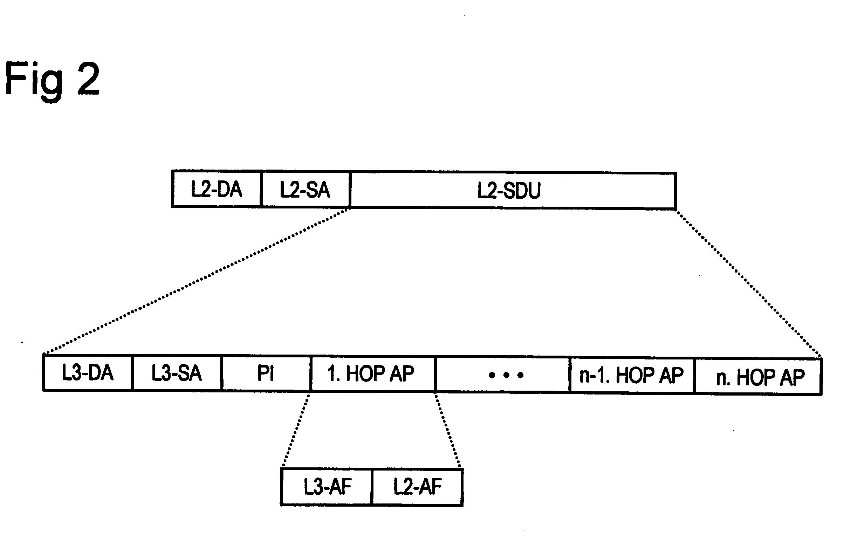

Fig 2 zeigt eine schematische Darstellung einer Verbindungsaufbaumeldung R (Request) bzw. einer Bestätigungsmeldung E (Establish). Die Verbindungsaufbaumeldung R bzw. die Bestätigungsmeldung E setzt sich aus einem Schicht-2-Zieladressfeld L2-DA (Layer 2 - Destination Adress), einem Schicht-2-Ursprungsadressfeld L2-SA (Layer 2 - Source Adress) und einem Service-Datenfeld L2-SDU (Layer 2 - Service Data Unit) zusammen. Im vorliegenden Beispiel enthält das Schicht-2-Zieladressfeld L2-DA die Schicht-2-Adresse L2-Z-KE gemäß OSI-Referenzmodell des Ziel-Kommunikationsendgerätes Z-KE und das Schicht-2-Ursprungsadressfeld L2-SA die Schicht-2-Adresse L2-U-KE gemäß OSI-Referenzmodell des Ursprungs-Kommunikationsendgerätes U-KE.

Das Service-Datenfeld L2-SDU untergliedert sich in ein Schicht-3-Zieladressfeld L3-DA, ein Schicht-3-Ursprungsadressfeld L3-SA, ein Protokoll-Info-Feld PI und in n Adresspaarfelder 1.HOP AP,...,n.HOP AP. Im vorliegenden Beispiel enthält das Schicht-3-Zieladressfeld L3-DA die Schicht-3-Adresse L3-Z-KE gemäß OSI-Referenzmodell des Ziel-Kommunikationsendgerätes Z-KE und das Schicht-3-Ursprungsadressfeld L3-SA die Schicht-3-Adresse L3-U-KE gemäß OSI-Referenzmodell des Ursprungs-Kommunikationsendgerätes U-KE.

Das Protokoll-Info-Feld PI dient der Unterscheidung zwischen Verbindungsaufbaumeldung R und Bestätigungsmeldung E und enthält alternativ als Eintrag ein 'R' oder ein 'E'. Weist das Protokoll-Info-Feld PI als Eintrag ein 'R' auf, so handelt es sich um eine Verbindungsaufbaumeldung R. Weist das Protokoll-Info-Feld PI als Eintrag ein 'E' auf, so handelt es sich um eine Bestätigungsmeldung E.

Die Adresspaarfelder 1.HOP AP,...,n.HOP AP sind jeweils in ein Schicht-3-Adressfeld L3-AF und in ein Schicht-2-Adressfeld L2-AF untergliedert. In den Adresspaarfeldern 1.HOP AP, ...,n.HOP AP sind im Schicht-3-Adressfeld L3-AF die Schicht-3-Adressen L3-NK und im Schicht-2-Adressfeld L2-AF die Schicht-2'-Adressen L2-NK der auf einem Leitweg LW durchlaufenen Netzknoten NK gespeichert.

Eine über den ersten Leitweg LW1 vom Ursprungs-Kommunikationsendgerät U-KE zum Ziel-Kommunikationsendgerät Z-KE übermittelte Verbindungsaufbaumeldung R enthält drei gültige Adresspaarfelder 1.HOP AP,...,3.HOP AP. Das erste Adresspaarfeld 1.HOP AP enthält die Schicht-3-Adresse L3-UNK des Ursprungs-Netzknotens UNK. Das zweite Adresspaarfeld 2.HOP AP enthält die Schicht-3-Adresse L3-NK3 des dritten Netzknotens NK3. Das dritte Adresspaarfeld 3.HOP AP enthält die Schicht-3-Adresse L3-ZNK des Ziel-Netzknotens ZNK.

Eine über den zweiten Leitweg LW2 vom Ursprungs-Kommunikationsendgerät U-KE zum Ziel-Kommunikationsendgerät Z-KE übermittelte Verbindungsaufbaumeldung R enthält fünf gültige Adresspaarfelder 1.HOP AP,...,5.HOP AP. Das erste Adresspaarfeld 1.HOP AP enthält die Schicht-3-Adresse L3-UNK des Ursprungs-Netzknotens UNK. Das zweite, dritte und vierte Adresspaarfeld 2.HOP AP, 3.HOP AP, 4.HOP AP enthalten die Schicht-3-Adressen L3-NK4, L3-NK5, L3-NK3 des vierten, fünften und dritten Netzknotens NK4, NK5, NK3. Das fünfte Adresspaarfeld 5.HOP AP enthält die Schicht-3-Adresse L3-ZNK des Ziel-Netzknotens ZNK.

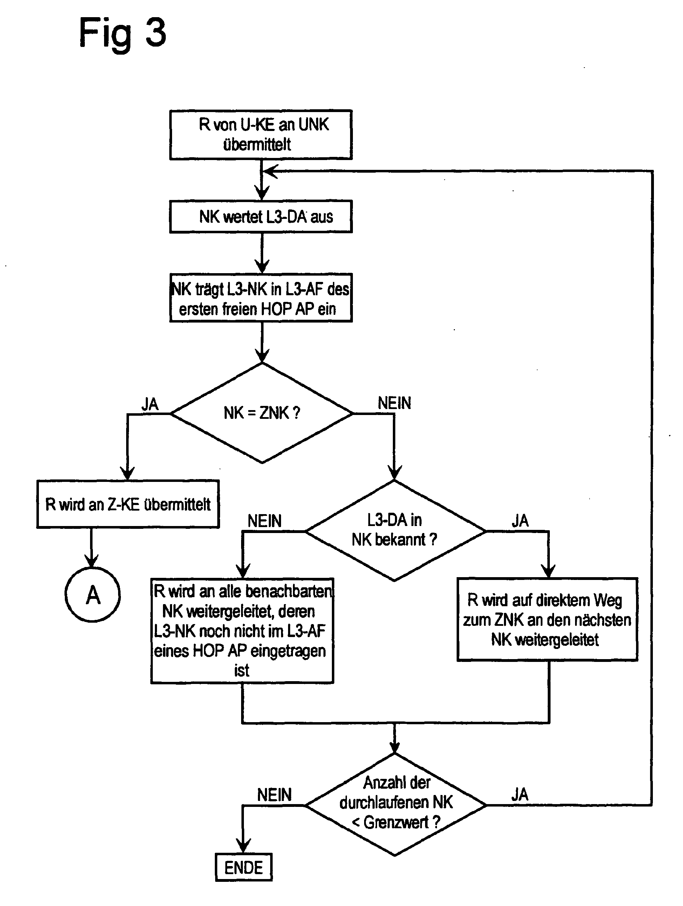

Fig 3 zeigt ein Ablaufdiagramm zur Veranschaulichung der bei einer Übermittlung einer Verbindungsaufbaumeldung R vom Ursprungs-Kommunikationsendgerät U-KE zum Ziel-Kommunikationsendgerät Z-KE ablaufenden Verfahrensschritte. Soll ausgehend vom Ursprungs-Kommunikationsendgerät U-KE eine Nachricht zum Ziel-Kommunikationsendgerät Z-KE übermittelt werden, so sendet das Ursprungs-Kommunikationsendgerät U-KE über den vordefinierten Übertragungskanal eine Verbindungsaufbaumeldung R an den Ursprungs-Netzknoten UNK. Der eine Verbindungsaufbaumeldung R empfangene Netzknoten NK wertet die, im Schicht-3-Zieladressfeld L3-DA hinterlegte Zieladresse L3-Z-KE des Ziel-Kommunikationsendgerätes Z-KE aus und trägt die ihm im ATM-basierten Kommunikationsnetz ATM-KN zugeordnete Schicht-3-Adresse L3-NK im Schicht-3-Adressfeld L3-AF des ersten freien Adresspaarfeldes 1.HOP AP,...,n.HOP AP ein. Handelt es sich bei dem Netzknoten NK um den Ursprungs-Netzknoten UNK, so trägt der Ursprungs-Netzknoten UNK die Schicht-3-Adresse L3-UNK im Schicht-3-Adressfeld L3-AF des ersten Adresspaarfeldes 1.HOP AP ein.

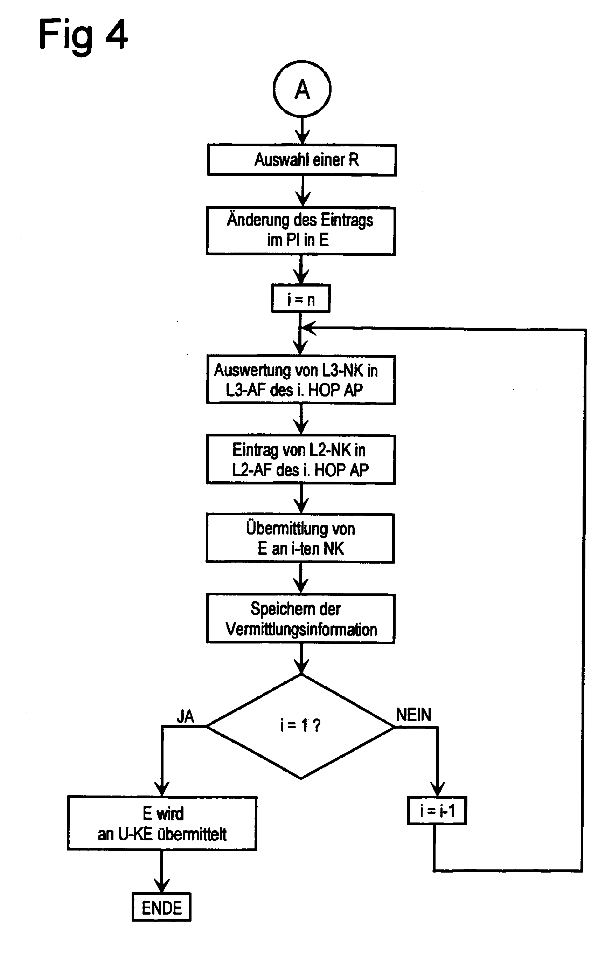

In einem nächsten Schritt wird überprüft, ob der Netzknoten NK, welcher eine Verbindungsaufbaumeldung R empfangen hat, der Ziel-Netzknoten ZNK ist. Ist dies der Fall, wird die Verbindungsaufbaumeldung R über den vordefinierten Übertragungskanal direkt an das Ziel-Kommunikationsendgerät Z-KE übermittelt. Die in diesem Fall ablaufenden Verfahrensschritte werden unter Bezugnahme auf Fig 4 näher erläutert. Ist der Netzknoten NK nicht der Ziel-Netzknoten ZNK, wird überprüft, ob die im Schicht-3-Zieladressfeld L3-DA hinterlegte Zieladresse L3-Z-KE des Ziel-Kommunikationsendgerätes Z-KE im Netzknoten NK bekannt ist. Ist dies der Fall, so wird die Verbindungsaufbaumeldung R über den vordefinierten Übertragungskanal zu dem, auf direktem Weg zum Ziel-Netzknoten ZNK liegenden nächsten Netzknoten NK weitergeleitet.

Ist die Zieladresse L3-Z-KE im Netzknoten NK nicht bekannt, so wird die Verbindungsaufbaumeldung R über die vordefinierten Übertragungskanäle an alle benachbarten Netzknoten NK weitergeleitet, deren Schicht-3-Adressen L3-NK nicht in einem Schicht-3-Adressfeld L3-AF eines Adresspaarfeldes 1.HOP AP,...,n.HOP AP eingetragen ist. Durch diese Maßnahme wird verhindert, daß es bei der Ermittlung eines Leitweges LW zu Schleifenbildungen kommt.

Vor einer Übermittlung der Verbindungsaufbaumeldung R an einen weiteren Netzknoten NK wird die Anzahl der bisher von der Verbindungsaufbaumeldung R durchlaufenen Netzknoten NK, d.h. die Anzahl der Einträge in einem Schicht-3-Adressfeld L3-AF der Adresspaarfelder 1.HOP AP,...,n.HOP AP ermittelt. Hat die Anzahl einen einstellbaren Grenzwert erreicht, so wird die Verbindungsaufbaumeldung R verworfen. Durch diese Maßnahme wird gewährleistet, daß die vom ATM-basierten Kommunikationsnetz ATM-KN zur Verfügung gestellten Übertragungsresourcen bei der Ermittlung eines Leitweges LW nicht unnötig belegt wird.

Fig 4 zeigt ein Ablaufdiagramm zur Veranschaulichung der bei einer Übermittlung einer Bestätigungsmeldung E vom Ziel-Kommunikationsendgerät Z-KE zum Ursprungs-Kommunikationsendgerät U-KE ablaufenden Verfahrensschritte. Hat das Ziel-Kommunikationsendgerät Z-KE mehrere Verbindungsaufbaumeldungen R innerhalb einer vorgebbaren Zeitspanne empfangen, wird eine Verbindungsaufbaumeldung R nach vorgebbaren Kriterien ausgewählt. Als Kriterien für die Auswahl einer Verbindungsaufbaumeldung R können beispielsweise die Übermittlungsdauer einer Verbindungsaufbaumeldung R, die auf dem durch die Verbindungsaufbaumeldung R definierten Leitweg LW durchlaufene Anzahl von Netzknoten NK, die durch den Leitweg LW entstehenden Kosten oder die auf dem Leitweg LW zur Verfügung gestellte Übertragungskapazität ausgewählt werden. Alternativ können auch Kombinationen aus diesen Kriterien für die Auswahl einer Verbindungsaufbaumeldung R herangezogen werden.

Nach der Auswahl einer Verbindungsaufbaumeldung R werden die anderen Verbindungsaufbaumeldungen R verworfen und die ausgewählte Verbindungsaufbaumeldung R durch Änderung des Eintrages im Protokoll-Info-Feld PI von 'R' auf 'E' in eine Bestätigungsmeldung E umgewandelt.

In einem nächsten Schritt wird die Schicht-3-Adresse L3-NK im Schicht-3-Adressfeld L3-AF des n. Adresspaarfeldes n.HOP AP ausgewertet und die Schicht-2-Adresse L2-NK des durch diese Adresse bezeichneten Netzknotens NK im Schicht-2-Adressfeld L2-AF des n. Adresspaarfeldes n.HOP AP eingetragen. In diesem Fall handelt es sich bei dem Netzknoten NK um den Ziel-Netzknoten ZNK. Anschließend wird die Bestätigungsmeldung E ausgehend vom Ziel-Kommunikationsendgerät Z-KE über den vordefinierten Übertragungskanal an den, durch die im Schicht-3-Adressfeld L3-AF des n. Adresspaarfeldes n.HOP AP hinterlegte Schicht-3-Adresse L3-NK bezeichneten Netzknoten NK - in diesem Fall den Ziel-Netzknoten ZNK - übermittelt. Im Netzknoten NK wird für eine nachfolgende Nachrichtenübermittlung zwischen dem Ursprungs-Kommunikationsendgerät U-KE und dem Ziel-Kommunikationsendgerät Z-KE eine Vermittlungsinformation gespeichert. Diese Vermittlungsinformation bestehend aus einem Eingangs-VCI-Wert und einem Ausgangs-VCI-Wert gibt an, welcher Eingangskanal mit welchem Ausgangskanal des Netzknotens vermittlungstechnisch verbunden wird.

Handelt es sich bei dem Netzknoten NK um den Ursprungs-Netzknoten UNK , d.h. ist n = 1, so wird die Bestätigungsmeldung über den vordefinierten Übertragungskanal direkt an das Ursprungs-Kommunikationsendgerät U-KE weiterübermittelt. Ist der Netzknoten NK nicht der Ursprungs-Netzknoten UNK wird in einem nächsten Schritt die Schicht-3-Adresse L3-NK im Schicht-3-Adressfeld L3-AF des n-1. Adresspaarfeldes n-1.HOP AP ausgewertet und die Schicht-2-Adresse L2-NK des durch diese Adresse bezeichneten Netzknotens NK im Schicht-2-Adressfeld L2-AF des n-1. Adresspaarfeldes n-1.HOP AP eingetragen. Anschließend wird die Bestätigungsmeldung E über den vordefinierten Übertragungskanal an den, durch die im Schicht-3-Adressfeld L3-AF des n-1. Adresspaarfeldes n-1.HOP AP hinterlegte Schicht-3-Adresse L3-NK bezeichneten Netzknoten NK übermittelt und die für eine nachfolgende Nachrichtenübermittlung zwischen dem Ursprungs-Kommunikationsendgerät U-KE und dem Ziel-Kommunikationsendgerät Z-KE notwendige Vermittlungsinformation bestehend aus Eingangs-VCI-Wert und Ausgangs-VCI-Wert gespeichert.

Diese Verfahrensschritte werden solange wiederholt, bis die Bestätigungsmeldung E den Ursprungs-Netzknoten UNK erreicht hat, von dem aus sie über den vordefinierten Übertragungskanal an das Ursprungs-Kommunikationsendgerät U-KE übermittelt wird.

Wird bei vorliegendem Ausführungsbeispiel als Kriterium für eine Auswahl einer Verbindungsaufbaumeldung R am Ziel-Kommunikationsendgerät Z-KE beispielsweise die Anzahl n der auf einem Leitweg LW durchlaufenen Netzknoten NK zugrunde gelegt, so wird die den ersten Leitweg LW1 repräsentierende Verbindungsaufbaumeldung R ausgewählt und in eine Bestätigungsmeldung E umgewandelt. Die den zweiten Leitweg LW2 repräsentierende Verbindungsaufbaumeldung R wird verworfen.

Im Ziel-Kommunikationsendgerät Z-KE wird die Schicht-3-Adresse L3-ZNK im Schicht-3-Adressfeld L3-AF des 3. Adresspaarfeldes 3.HOP AP ausgewertet und die Schicht-2-Adresse L2-ZNK des durch die Schicht-3-Adresse L3-ZNK bezeichneten Ziel-Netzknotens ZNK im Schicht-2-Adressfeld L2-AF des 3. Adresspaarfeldes 3.HOP AP eingetragen. Anschließend wird die Bestätigungsmeldung E ausgehend vom Ziel-Kommunikationsendgerät Z-KE über den vordefinierten Übertragungskanal an den Ziel-Netzknoten ZNK übermittelt. Im Ziel-Netzknoten wird die für eine nachfolgende Nachrichtenübermittlung relevante Vermittlungsinformation bestehend aus Eingangs-VCI-Wert und Ausgangs-VCI-Wert gespeichert. In einem nächsten Schritt wird die Schicht-3-Adresse L3-NK3 im Schicht-3-Adressfeld L3-AF des 2. Adresspaarfeldes 2.HOP AP ausgewertet und die Schicht-2-Adresse L2-NK3 des durch die Schicht-3-Adresse L3-NK3 bezeichneten dritten Netzknotens NK3 im Schicht-2-Adressfeld L2-AF des 2. Adresspaarfeldes 2.HOP AP eingetragen. Anschließend wird die Bestätigungsmeldung E ausgehend vom Ziel-Netzknoten Z-NK über den vordefinierten Übertragungskanal an den dritten Netzknoten NK3 übermittelt, in dem die für eine nachfolgende Nachrichtenübermittlung relevante Vermittlungsinformation gespeichert wird. In einem weiteren Schritt wird die Schicht-3-Adresse L3-UNK im Schicht-3-Adressfeld L3-AF des 1. Adresspaarfeldes 1.HOP AP ausgewertet und die Schicht-2-Adresse L2-UNK des durch die Schicht-3-Adresse L3-UNK bezeichneten Ursprungs-Netzknotens UNK im Schicht-2-Adressfeld L2-AF des 1. Adresspaarfeldes 1.HOP AP eingetragen. Anschließend wird die Bestätigungsmeldung E ausgehend vom dritten Netzknoten NK3 über den vordefinierten Übertragungskanal an den Ursprungs-Netzknoten NK3 übermittelt, in dem die für eine nachfolgende Nachrichtenübermittlung relevante Vermittlungsinformation gespeichert wird. In einem abschließenden Schritt wird die Bestätigungsmeldung E tiber den vordefinierten übertragungskanal an das Ursprungs-Kommunikationsendgerät U-KE übermittelt.

Werden über die, der in einem Netzknoten NK gespeicherten Vermittlungsinformation zugeordneten Verbindung zwischen dem Ursprungs-Kommunikationsendgerät U-KE und dem Ziel-Kommunikationsendgerät Z-KE innerhalb einer einstellbaren Zeitspanne z.B. innerhalb einer Zeitspanne von 10 Minuten keine Nachrichten übermittelt, so wird diese Vermittlungsinformation gelöscht. Somit wird gewährleistet, daß die in einem Netzknoten NK gespeicherte Vermittlungsinformation fortlaufend aktualisiert wird.

Im Gegensatz zur herkömmlichen Signalisierung in einem ATM-basierten Kommunikationsnetz ATM-KN, bei der in jedem Netzknoten NK Vermittlungsinformationen für eine Nachrichtenübermittlung an einen weiteren im ATM-basierten Kommunikationsnetz ATM-KN angeordneten Netzknoten NK gespeichert werden müssen, werden bei dem beschriebenen Verfahren zur Leitwegermittlung nur diejenigen Vermittlungsinformationen in einem Netzknoten NK gespeichert, die für die aktuell über den Netzknoten NK geführten Verbindungen benötigt werden. Dies führt zu einer erheblichen Reduktion der benötigten Adresspeicher-Kapazität im Netzknoten NK und zu einer Erhöhung der Vermittlungsgeschwindigkeit.

Des weiteren wird im Gegensatz zur herkömmlichen Signalisierung, bei welcher der Leitweg LW zwischen dem Ursprungs-Kommunikationsendgerät U-KE und dem Ziel-Kommunikationsendgerät Z-KE durch die im Ursprungs-Netzknoten UNK gespeicherte Vermittlungsinformation vorbestimmt ist, eine Auswahl eines Leitweges LW zwischen dem Ursprungs-Kommunikationsendgerät U-KE und dem Ziel-Kommunikationsendgerät Z-KE durch den Teilnehmer am Ziel-Kommunikationsendgerät Z-KE getroffen. Somit können die für den Teilnehmer relevanten Kriterien für einen Verbindungsaufbau, wie z.B. die Übermittlungszeit, die durch einen Leitweg LW entstehenden Kosten oder die auf einem Leitweg LW zur Verfügung gestellte Übertragungskapazität situationsbedingt berücksichtigt werden.

Beim vorliegenden Verfahren zur Leitwegermittlung werden im Gegensatz zur herkömmlichen Signalisierung in einem ATM-basierten Kommunikationsnetz ATM-KN keine Übertragungsbedingungen, wie z.B. eine Vereinbarung über die benötigte Übertragungskapazität oder über Realzeit-Anforderungen getroffen. Dadurch ist eine Leitwegermittlung und eine nachfolgende Nachrichtenübermittlung zwischen dem Ursprungs-Kommunikationsendgerät U-KE und dem Ziel-Kommunikationsendgerät Z-KE schneller realisierbar. Die Übermittlung einer Verbindungsaufbaumeldung R bzw. einer Bestätigungsmeldung E erfolgt im ATM-basierten Kommunikationsnetz ATM-KN mit der verfügbaren Übertragungsbitrate - in der Literatur häufig mit ABR (Available Bitrate) abgekürzt. Somit entstehen durch das erfindgungsgemäße Verfahren bei einer Emulation von verbindungslosen Diensten über das ATM-basierte Kommunikationsnetz ATM-KN nur Verarbeitungs- bzw. Übermittlungsverzögerung wie im Rahmen von verbindungsorientierten Diensten.

## Patentansprüche

1. Verfahren zum Einrichten eines Leitweges (LW) über ein, mehrere miteinander verbundene Netzknoten (NK) aufweisendes verbindungsorientiertes Kommunikationsnetz (ATM-KN) zur Emulation von verbindungslosen Diensten,
**dadurch gekennzeichnet,**
**daß** ausgehend von einem Ursprungs-Kommunikationsendgerät (U-KE) eine, eine Ziel- und eine Ursprungsadresse (L3-DA; L3-SA) beinhaltende Verbindungsaufbaumeldung (R) an einen Netzknoten (NK) übermittelt wird,
**daß** der Netzknoten (NK) die ihm im Kommunikationsnetz (ATM-KN) zugeordnete Netzknoten-Adresse (L3-NK) in die Verbindungsaufbaumeldung (R) einträgt,
**daß** ein, die Verbindungsaufbaumeldung (R) empfangender Netzknoten (NK) diese an mindestens einen benachbarten Netzknoten (NK) weiterleitet,
**daß** bei Empfang der Verbindungsaufbaumeldung (R) an einem, mit Hilfe der Zieladresse (L3-DA) identifizierbaren Ziel-Netzknoten (ZNK), die Verbindungsaufbaumeldung (R) an ein Ziel-Kommunikationsendgerät (Z-KE) weitergeleitet wird, und daß eine Bestätigungsmeldung (E) auf dem durch die Ursprungsadresse (L3-SA) und durch die eingetragenen Netzknoten-Adressen (L3-NK) definierten Leitweg (LW) an das Ursprungs-Kommunikationsendgerät (U-KE) zurückgesendet wird, wobei in den durchlaufenen Netzknoten (NK) eine Vermittlungsinformation für zwischen dem Ursprungs- und dem Ziel-Kommunikationsendgerät (U-KE; Z-KE) im weiteren zu übermittelnden Nachrichten hinterlegt wird.

2. Verfahren zum Einrichten eines Leitweges (LW) über ein, mehrere miteinander verbundene Netzknoten (NK) aufweisendes verbindungsorientiertes Kommunikationsnetz (ATM-KN) zur Emulation von verbindungslosen Diensten,
**dadurch gekennzeichnet,**
**daß** ausgehend von einem Ursprungs-Kommunikationsendgerät (U-KE) eine, eine Ziel- und eine Ursprungsadresse (L3-DA; L3-SA) beinhaltende Verbindungsaufbaumeldung (R) an einen Netzknoten (NK) übermittelt wird,
**daß** der Netzknoten (NK) die ihm im Kommunikationsnetz (ATM-KN) zugeordnete Netzknoten-Adresse (L3-NK) in die Verbindungsaufbaumeldung (R) einträgt,
**daß** ein, die Verbindungsaufbaumeldung (R) empfangender Netzknoten (NK) diese an mindestens einen benachbarten Netzknoten (NK) weiterleitet, und
**daß** bei Empfang der Verbindungsaufbaumeldung (R) an einem, mit Hilfe der Zieladresse (L3-DA) identifizierbaren Ziel-Netzknoten (ZNK) eine Bestätigungsmeldung (E) auf dem durch die Ursprungsadresse (L3-SA) und durch die eingetragenen Netzknoten-Adressen (L3-NK) definierten Leitweg (LW) an das Ursprungs-Kommunikationsendgerät (U-KE) zurückgesendet wird, wobei in den durchlaufenen Netzknoten (NK) eine Vermittlungsinformation für zwischen dem Ursprungs- und dem Ziel-Kommunikationsendgerät (U-KE; Z-KE) im weiteren zu übermittelnden Nachrichten hinterlegt wird.

3. Verfahren zum Einrichten eines Leitweges (LW) über ein, mehrere miteinander verbundene Netzknoten (NK) aufweisendes verbindungsorientiertes Kommunikationsnetz (ATM-KN) zur Emulation von verbindungslosen Diensten,
**dadurch gekennzeichnet,**
**daß** ausgehend von einem Ursprungs-Kommunikationsendgerät (U-KE) eine, eine Ziel- und eine Ursprungsadresse (L3-DA; L3-SA) beinhaltende Verbindungsaufbaumeldung (R) an einen Netzknoten (NK) übermittelt wird,
**daß** der Netzknoten (NK) die ihm im Kommunikationsnetz (ATM-KN) zugeordnete Netzknoten-Adresse (L3-NK) in die Verbindungsaufbaumeldung (R) einträgt,
**daß** ein, die Verbindungsaufbaumeldung (R) empfangender Netzknoten (NK) diese an mindestens einen benachbarten Netzknoten (NK) weiterleitet,
**daß** bei Empfang der Verbindungsaufbaumeldung (R) an einem, mit Hilfe der Zieladresse (L3-DA) identifizierbaren Ziel-Netzknoten (ZNK), die Verbindungsaufbaumeldung (R) an ein Ziel-Kommunikationsendgerät (Z-KE) weitergeleitet wird, und daß eine Bestätigungsmeldung (E) auf dem durch die Ursprungsadresse (L3-SA) und durch die eingetragenen Netzknoten-Adressen (L3-NK) definierten Leitweg (LW) an einen Ursprungs-Netzknoten (UNK), dem das Ursprungs-Kommunikationsendgerät (U-KE) zugeordnet ist, zurückgesendet wird, wobei in den durchlaufenen Netzknoten (NK) eine Vermittlungsinformation für zwischen dem Ursprungs- und dem Ziel-Kommunikationsendgerät (U-KE; Z-KE) im weiteren zu übermittelnden Nachrichten hinterlegt wird.

4. Verfahren zum Einrichten eines Leitweges (LW) über ein, mehrere miteinander verbundene Netzknoten (NK) aufweisendes verbindungsorientiertes Kommunikationsnetz (ATM-KN) zur Emulation von verbindungslosen Diensten,
**dadurch gekennzeichnet,**
**daß** ausgehend von einem Ursprungs-Kommunikationsendgerät (U-KE) eine, eine Ziel- und eine Ursprungsadresse (L3-DA; L3-SA) beinhaltende Verbindungsaufbaumeldung (R) an einen Netzknoten (NK) übermittelt wird,
**daß** der Netzknoten (NK) die ihm im Kommunikationsnetz (ATM-KN) zugeordnete Netzknoten-Adresse (L3-NK) in die Verbindungsaufbaumeldung (R) einträgt,
**daß** ein, die Verbindungsaufbaumeldung (R) empfangender Netzknoten (NK) diese an mindestens einen benachbarten Netzknoten (NK) weiterleitet,
**daß** bei Empfang der Verbindungsaufbaumeldung (R) an einem, mit Hilfe der Zieladresse (L3-DA) identifizierbaren Ziel-Netzknoten (ZNK) eine Bestätigungsmeldung (E) auf dem durch die Ursprungsadresse (L3-SA) und durch die eingetragenen Netzknoten-Adressen (L3-NK) definierten Leitweg (LW) an einen Ursprungs-Netzknoten (UNK), dem das Ursprungs-Kommunikationsendgerät (U-KE) zugeordnet ist, zurückgesendet wird, wobei in den durchlaufenen Netzknoten (NK) eine Vermittlungsinformation für zwischen dem Ursprungs- und dem Ziel-Kommunikationsendgerät (U-KE; Z-KE) im weiteren zu übermittelnden Nachrichten hinterlegt wird.

## Claims

1. Method for establishing a route (LW) via a connection-oriented communications network (ATM-KN), that has several interconnected network nodes (NK), for emulating connectionless services,
**characterised in**
**that**, based on a source terminal (U-KE), a connection message (R) that contains a destination address and a source address (L3-DA; L3-SA) is transmitted to a network node (NK),
**that** the network node (NK) enters its allocated network node address (L3-NK) in the communications network (ATM-KN) into the connection message (R),
**that** a network node (NK) receiving the connection message (R) passes the connection message on to at least one adjacent network node (NK),
**that**, when the connection message (R) is received by a destination network node (ZNK) identifiable using the destination address (L3-DA), the connection message (R) is passed on to a destination terminal (Z-KE) and that a confirmation message (E) is sent back to the source terminal (U-KE) on the route (LW) defined by the source address (L3-SA) and by the network node addresses (L3-NK) entered wherein, in the network nodes (NK) passed through, a piece of information is stored for messages to be subsequently transmitted between the source terminal and the destination terminal (U-KE; Z-KE).

2. Method for establishing a route (LW) via a connection-oriented communications network (ATM-KN), that has several interconnected network nodes (NK), for emulating connectionless services,
**characterised in**
**that**, based on a source terminal (U-KE), a connection message (R) that contains a destination address and a source address (L3-DA; L3-SA) is transmitted to a network node (NK),
**that** the network node (NK) enters its allocated network node address (L3-NK) in the communications network (ATM-KN) into the connection message (R),
**that** a network node (NK) receiving the connection message (R) passes the connection message on to at least one adjacent network node (NK), and
**that**, when the connection message (R) is received by a destination network node (ZNK) identifiable using the destination address (L3-DA), a confirmation message (E) is sent back to the source terminal (U-KE) on the route (LW) defined by the source address (L3-SA) and by the network node addresses (L3-NK) entered wherein, in the network nodes (NK) passed through, a piece of switching information is stored for messages to be subsequently transmitted between the source terminal and the destination terminal (U-KE; Z-KE).

3. Method for establishing a route (LW) via a connection-oriented communications network (ATM-KN), that has several interconnected network nodes (NK), for emulating connectionless services,
**characterised in**
**that**, based on a source terminal (U-KE), a connection message (R) that contains a destination address and a source address (L3-DA; L3-SA) is transmitted to a network node (NK),
**that** the network node (NK) enters its allocated network node address (L3-NK) in the communications network (ATM-KN) into the connection message (R),
**that** a network node (NK) receiving the connection message (R) passes the connection message on to at least one adjacent network node (NK),
**that**, when the connection message (R) is received by the destination network node (ZNK) identifiable using the destination address (L3-DA), the connection message (R) is passed to a destination terminal (Z-KE) and that a confirmation message (E) is sent back to a source network node (UNK) to which the source terminal (U-KE) is allocated, on the route (LW) defined by the source address (L3-SA) and by the network node addresses (L3-NK) entered wherein, in the network nodes (NK) passed through, a piece of switching information is stored for messages to be subsequently transmitted between the source terminal and the destination terminal (U-KE; Z-KE).

4. Method for establishing a route (LW) via a connection-oriented communications network (ATM-KN), that has several interconnected network nodes (NK), for emulating connectionless services,
**characterised in**
**that**, based on a source terminal (U-KE), a connection message (R) that contains a destination address and a source address (L3-DA; L3-SA) is transmitted to a network node (NK),
**that** the network node (NK) enters its allocated network node address (L3-NK) in the communications network (ATM-KN) into the connection message (R),
**that** a network node (NK) receiving the connection message (R) passes the connection message on to at least one adjacent network node (NK),
**that**, when the connection message (R) is received by a destination network node (ZNK) identifiable using the destination address (L3-DA), a confirmation message (E) is sent back to a source network node (UNK) to which the source terminal (U-KE) is allocated, on the route (LW) defined by the source address (L3-SA) and by the network node addresses (L3-NK) entered wherein, in the network nodes (NK) passed through, a piece of switching information is stored for messages to be subsequently transmitted between the source terminal and the destination terminal (U-KE; Z-KE).

## Revendications

1. Procédé servant à établir une voie (LW) sur un réseau de communication (ATM-KN) orienté connexion présentant plusieurs noeuds de réseau (NK) reliés entre eux et servant à émuler des services sans connexions,
**caractérisé en ce**
**qu'**en partant d'un équipement terminal de communication d'origine (U-KE), un message d'établissement de liaison (R) contenant une adresse de destination et une adresse d'origine (L3-DA ; L3-SA) est transmis à un noeud de réseau (NK),
**que** le noeud de réseau (NK) enregistre dans le message d'établissement de liaison (R) l'adresse de noeud de réseau (L3-NK) qui lui est associée dans le réseau de communication (ATM-KN),
**qu'**un noeud de réseau (NK) recevant le message d'établissement de liaison (R) transfère ce dernier à au moins un noeud de réseau (NK) voisin,
**qu'**à réception du message d'établissement de liaison (R) au niveau d'un noeud de réseau de destination (ZNK) identifiable à l'aide de l'adresse de destination (L3-DA), ledit message d'établissement de liaison (R) est transféré à un équipement terminal de communication de destination (Z-KE), et en ce qu'un message d'accusé de réception (E) est renvoyé à l'équipement terminal de communication d'origine (U-KE) sur la voie (LW) définie par l'adresse d'origine (L3-SA) et par les adresses de noeuds de réseau (L3-NK) enregistrées, sachant qu'une information de commutation est mémorisée dans les noeuds de réseau (NK) parcourus pour une transmission ultérieure de messages entre l'équipement terminal d'origine et l'équipement terminal de communication de destination (U-KE ; Z-KE).

2. Procédé servant à établir une voie (LW) sur un réseau de communication (ATM-KN) orienté connexion présentant plusieurs noeuds de réseau (NK) reliés entre eux et servant à émuler des services sans connexions,
**caractérisé en ce**
**qu'**en partant d'un équipement terminal de communication d'origine (U-KE), un message d'établissement de liaison (R) contenant une adresse de destination et une adresse d'origine (L3-DA ; L3-SA) est transmis à un noeud de réseau (NK),
**que** le noeud de réseau (NK) enregistre dans le message d'établissement de liaison (R) l'adresse de noeud de réseau (L3-NK) qui lui est associée dans le réseau de communication (ATM-KN),
**qu'**un noeud de réseau (NK) recevant le message d'établissement de liaison (R) transfère ce dernier à au moins un noeud de réseau (NK) voisin, et
**qu'**à réception du message d'établissement de liaison (R) au niveau d'un noeud de réseau de destination (ZNK) identifiable à l'aide de l'adresse de destination (L3-DA), un message d'accusé de réception (E) est renvoyé à l'équipement terminal de communication d'origine (U-KE) sur la voie (LW) définie par l'adresse d'origine (L3-SA) et par les adresses de noeuds de réseau (L3-NK) enregistrées, sachant qu'une information de commutation est mémorisée dans les noeuds de réseau (NK) parcourus pour une transmission ultérieure d'informations entre l'équipement terminal de communication d'origine et l'équipement terminal de communication de destination (U-KE ; Z-KE).

3. Procédé servant à établir une voie (LW) sur un réseau de communication (ATM-KN) orienté connexion, présentant plusieurs noeuds de réseau (NK) reliés entre eux et servant à émuler des services sans connexion,
**caractérisé en ce**
**qu'**en partant d'un équipement terminal de communication d'origine (U-KE), un message d'établissement de liaison (R) contenant une adresse de destination et une adresse d'origine (L3-DA ; L3-SA) est transmis à un noeud de réseau (NK),
**que** le noeud de réseau (NK) enregistre dans le message d'établissement de liaison (R) l'adresse de noeud de réseau (L3-NK) qui lui est associée dans le réseau de communication (ATM-KN),
**qu'**un noeud de réseau (NK) recevant le message d'établissement de liaison (R) transfère ce dernier à au moins un noeud de réseau (NK) voisin,
**qu'**à réception du message d'établissement de liaison (R) au niveau d'un noeud de réseau de destination (ZNK) identifiable à l'aide de l'adresse de destination (L3-DA), le message d'établissement de liaison (R) est transféré à un équipement terminal de communication de destination (Z-KE), et en ce qu'un message d'accusé de réception (E) est renvoyé à un noeud de réseau d'origine (UNK), auquel est associé l'équipement terminal de communication d'origine (U-KE), sur la voie (LW) définie par l'adresse d'origine (L3-SA) et par les adresses de noeuds de réseau (L3-NK) enregistrées, sachant qu'une information de commutation est mémorisée dans les noeuds de réseau (NK) parcourus pour une transmission ultérieure entre l'équipement terminal de communication d'origine et l'équipement terminal de communication de destination (U-KE ; Z-KE).

4. Procédé servant à établir une voie (LW) sur un réseau de communication (ATM-KN) orienté connexion, présentant plusieurs noeuds de réseau (NK) reliés entre eux et servant à émuler des services sans connexions,
**caractérisé en ce**
**qu'**en partant d'un équipement terminal de communication d'origine (U-KE), un message d'établissement de liaison (R) contenant une adresse de destination et une adresse d'origine (L3-DA, L3-SA) est transmis à un noeud de réseau (NK),
**que** le noeud de réseau (NK) enregistre dans le message d'établissement de liaison (R) l'adresse de noeud de réseau (L3-NK) qui lui est associée dans le réseau de communication (ATM-KN),
**qu'**un noeud de réseau (NK) recevant le message d'établissement de liaison (R) transfère ce dernier à au moins un noeud de réseau (NK) voisin,
**qu'**à réception du message d'établissement de liaison (R) au niveau d'un noeud de réseau de destination (ZNK) identifiable à l'aide de l'adresse de destination (L3-DA), un message d'accusé de réception (E) est renvoyé à un noeud de réseau d'origine (UNK), auquel est associé l'équipement terminal de communication d'origine (U-KE), sur la voie (LW) définie par l'adresse d'origine (L3-SA) et par les adresses de noeuds de réseau (L3-NK) enregistrées, sachant qu'une information de commutation est mémorisée dans les noeuds de réseau parcourus (NK) pour une transmission ultérieure de messages entre l'équipement terminal de communication d'origine et l'équipement terminal de communication de destination (U-KE ; Z-KE).
